# EUROPEAN PATENT APPLICATION

(11) **EP 1 667 410 A1**
(43) Date of publication of application: **07.06.2006**
(21) Application number: 05090328.5
(22) Date of filing: 30.11.2005
(51) Int. Cl.: H04M 1/02

(54) **Foldable type portable terminal with two hinges**

(30) Priority: 01.12.2004 JP 2004348074
(71) Applicant: NEC CORPORATION, Minato-ku, Tokyo 108-01 (JP)
(72) Inventor: Otsuka, Katsuhiro, Kakegawa-shi Shizuoka (JP)
(74) Representative: Wenzel & Kalkoff

(57) **Abstract**

In a portable terminal, the hinge portion (3) includes an intermediate case (31) having a plate-like shape, a first hinge (32) for rotatably coupling the vicinity of one end of a lower case (1) with the vicinity of one end of the intermediate case (31) about a first axis, and a second hinge (33) for rotatably coupling an upper case (2) with the intermediate case (31) about a second axis parallel to the first axis. The second hinge (33) couples the other end of the intermediate case (31) with the rear surface of the upper case (2).

## Description

This application claims priority of prior Japanese patent application JP 2004-348074, the disclosure of which is incorporated herein by reference.

### Background of the Invention:

The present invention relates to a portable terminal such as a cellular phone apparatus and, in particular, to a foldable type portable in which a lower case furnished with operational buttons and an upper case furnished with a display portion are rotatably coupled with each other through a hinge portion.

A portable terminal known in the art has a lower case and an upper case coupled with each other, the lower case having operational buttons on at least the front surface and the upper case having a display portion on at least the front surface.

A variety of opening/closing types have been proposed for such a portable terminal composed of a lower case and an upper case.

A foldable type portable terminal as the most popular type has upper and lower cases coupled at one end through a hinge portion and is opened/closed like a makeup compact. This foldable terminal is opened when in use in such a way that the front surfaces of the upper case and lower case move away from each other. On the other hand, the portable terminal is closed when not in use in such a way that the front surfaces of the upper case and lower case come into close contact (folded state). In the closed state, a user can view the display portion on the outer surface of the upper case.

As other opening/closing types of the portable terminal, a sliding type, a revolver type, and a two-spindle type have been known.

The sliding type portable terminal is opened such that the lower case and the upper case slide to expose the operational buttons on the front surface of the lower case. On the other hand, the sliding type portable terminal is closed such that the lower case and the upper case slide to overlap each other.

The revolver type portable terminal is opened such that the upper case and the lower case revolve to expose the operational buttons on the front surface of the lower case. On the other hand, the revolver type portable terminal is closed such that the upper case and the lower case pivot on a predetermined rotational axis and turn in a horizontal plane to overlap each other.

In the two-spindle type portable terminal, the lower case and the upper case are rotatably coupled with each other through a hinge portion. In an open state, the operational buttons on the front surface of the lower case are exposed. In a closed state, the lower case and the upper case revolve about the hinge portion to make the front surfaces of the lower case and upper case overlap each other with little gap. Then, a user can view the display portion. Alternatively, in the open state, the upper case revolves about a first axis by 180 degrees, and then the upper case and the lower case pivot on a second axis perpendicular to the first axis to overlap each other. Thus, the display portion is hidden.

Japanese Unexamined Patent Application Publication No. 2002-344591 discloses another example of the two-spindle portable terminal. In this two-spindle portable terminal, a lower case having operational buttons on the front surface is rotatably coupled through a hinge portion with an upper case that is slightly smaller than the lower case, and has a display portion on the front surface. The hinge portion has a support casing that is substantially U-shaped, a first hinge for coupling one end of the lower case and a proximal end of the support casing rotatably on a first axis, and a pair of pivots for coupling a pair of distal ends of the support casing and right and left sides of the upper case rotatably on a second axis parallel to the first axis. In the open state, the operational buttons on the front surface of the lower case are exposed. In the closed state, the lower case and the upper case revolve about the hinge portion, and thus the front surfaces of the upper case and lower case overlap with little gap to allow the display portion to be seen. Alternatively, the upper case rotates about the first axis of the hinge portion by 180 degrees in an opened state, and then the lower case and the upper case revolve and overlap with little gap to hide the display portion from view.

However, the above foldable type, sliding type, revolving type, and two-spindle portable terminals have advantages and disadvantages in the openlclosed states. Thus, it is difficult to select the best type from among the above types.

In general, a foldable type portable terminal has a problem in that a display portion on an upper case is hidden in a closed state. In order to solve this problem, there is proposed a foldable type portable terminal where a small display portion is provided on the rear side of an upper case to allow a user to check information such as time and date, a remaining amount of battery, and the intensity of radio waves even in a closed state. However, this portable terminal has a problem in that the display portion is provided on the rear side and thus, the upper case thickness increases by an amount equal to the thickness of the additional display.

The sliding type or revolver type portable terminal is free from the above problem inherent in the foldable type portable terminal since the display portion can be checked even in the closed state. However, the display portion is exposed all the time even while closed, and thus a screen is easily damaged.

The two-spindle portable terminal is free from the above problems since the display portion can be seen or can be hidden from view in a closed state. However, a two-spindle structure including a hinge and pivots provided close to each other is complicated and increases costs, and in addition, the rotational axes extend in different directions, so a folding operation is complicated.

Also in the other example of the two-spindle portable terminal, the display portion can be seen or can be hidden from view in the closed state, so the above problems are overcome. In addition, the two rotational axes extend in the same direction, so the folding operation is simple. However, both sides of the U-shaped support casing are thin, and a stress concentrates on a pair of pivots for coupling the distal end of the support casing and the right and left sides of the upper case. Hence, this example is inferior in strength and durability. Further, it is difficult to embed a wire for connecting between a circuit board in the lower case and a circuit board in the upper case, and between the display portion and a backlight, in the pivot portion due to the structural limitations and there is a fear that the strength and durability are lowered.

### Summary of the Invention:

Accordingly, it is an object of the present invention to provide a portable terminal that enables a simple structure, an easy-to-view display portion in various use forms, and an easy-to-handle structure.

According to the present invention, it is possible to provide a portable terminal comprising a lower case having a plate-like shape and being provided on a front surface with an operational button, an upper case having a plate-like shape and being provided on a front surface with a display portion, and a hinge portion for rotatably coupling the lower case and the upper case. The hinge portion includes an intermediate case having a plate-like shape, a first hinge for rotatably coupling the vicinity of one end of the lower case with the vicinity of one end of the intermediate case about a first axis, and a second hinge for rotatably coupling the upper case with the intermediate case about a second axis parallel to the first axis. The portable terminal can take a first opened/closed state where the front surface of the lower case opposes the front surface of the upper case, a second opened/closed state where the front surface of the lower case and the front surface of the upper case extend in parallel, and a third opened/closed state where the front surface of the lower case opposes a rear surface of the upper case, The second hinge couples the other end of the intermediate case with the rear surface of the upper case.

The portable terminal may further comprise a first printed board incorporated in the lower case, a second printed board incorporated in the upper case, and a flexible board for coupling between the first printed board and the second printed board. In this structure, the flexible board is passed through internal spaces of the first hinge, the intermediate case, and the second hinge.

The width of the second hinge may be subequal to the width of the upper case.

The widths of the first hinge, the intermediate case, the second hinge, and the upper case may be subequal to the width of the lower case, respectively.

The intermediate case may include a proximal portion including the one end and a main portion including the other end. In this structure, the main portion is larger than the proximal portion in length perpendicular to width and thickness directions of the intermediate case. The proximal portion and the main portion of the intermediate case are coupled with each other through a bendable portion parallel to the first axis. In the third opened/closed state, the lower case, the main portion of the intermediate case, and the upper case are superposed on one another in paralhl.

In the first opened/closed state, the lower case, the upper case, and the main portion of the intermediate case may be superposed on one another in parallel, and the front surface of the lower case faces the front surface of the upper case.

The portable terminal may further comprise a camera mounted on a rear surface of the lower case.

### Brief Description of the Drawings:

Figs. 1A and 1B are perspective views showing how a known foldable type portable terminal is opened/closed;
Figs. 2A and 2B are perspective views showing how a known sliding type portable terminal is opened/closed;
Figs. 3A and 3B are perspective views showing how a known revolver type portable terminal is openedlclosed;
Figs. 4A to 4C are perspective views showing how a known two-spindle portable terminal is opened/closed;
Fig. 5 is a perspective view showing how a portable terminal according to a first embodiment of the present invention is opened;
Fig. 6 is a perspective view illustrating how to wire between lower and upper case of the portable terminal of Fig. 5;
Fig. 7 is a side view showing a first opened/closed state of the portable terminal of Fig. 5;
Fig. 8 is a side view showing a second opened/closed state of the portable terminal of Fig. 5;
Fig. 9 is a side view showing a third opened/closed state of the portable terminal of Fig. 5;
Fig. 10 is a side view showing a fourth opened/dosed state of the portable terminal of Fig. 5;
Fig. 11 is a side view showing a fifth opened/closed state of the portable terminal of Fig. 5;
Fig. 12 is a perspective view showing how a portable terminal according to a second embodiment of the present invention is opened;
Fig. 13A is a side view showing a first opened/closed state of the portable terminal of Fig. 12; and
Fig. 13B is a side view showing a third opened/closed state of the portable terminal of Fig. 12.

### Description of the Preferred Embodiments:

First, an existing foldable type portable terminal will be described with reference to the accompanying drawings in order to facilitate understanding of the present invention.

As a well-known portable terminal, a lower case having operational buttons at least on the front surface is coupled with an upper case having a display portion at least on the front surface.

A variety of opening/closing states are proposed for such a portable terminal composed of a lower case and an upper case.

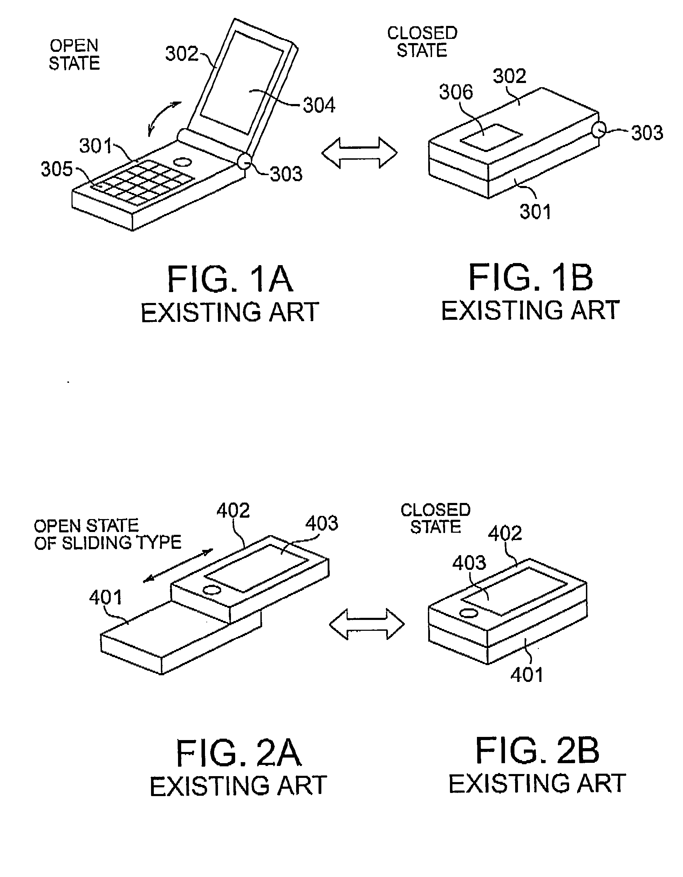

To describe the most popular structure, as shown in Fig. 1A, a lower case 301 having operational buttons 305 on the front surface and an upper case 302 having a display portion 304 on the front surface are coupled at one end rotatably on a hinge portion 303, and the portable terminal opens/closes like a makeup compact. In this foldable type portable terminal, as shown in Fig. 1A, the front surfaces of the lower case 301 and the upper case 302 move away from each other when in use. On the other hand, when not in use, as shown in Fig. 1 B, the front surfaces of the lower case 301 and the upper case 302 overlap with each other with little gap (folded state). In a closed state, a display portion 306 provided on the outer side of the upper case can be seen.

A sliding type, a revolver type, and a two-spindle type are known aside from the foldable type portable terminal.

The sliding type portable terminal is structured such that in an opened state, a lower case 401 having operational buttons on the front surface and an upper case 402 having a display portion 403 on the front surface slide so as to expose the operational buttons on the front surface of the lower case 401 as shown in Fig. 2A, and in a closed state, the lower case 401 and the upper case 402 slide to overlap with each other as shown in Fig. 2B.

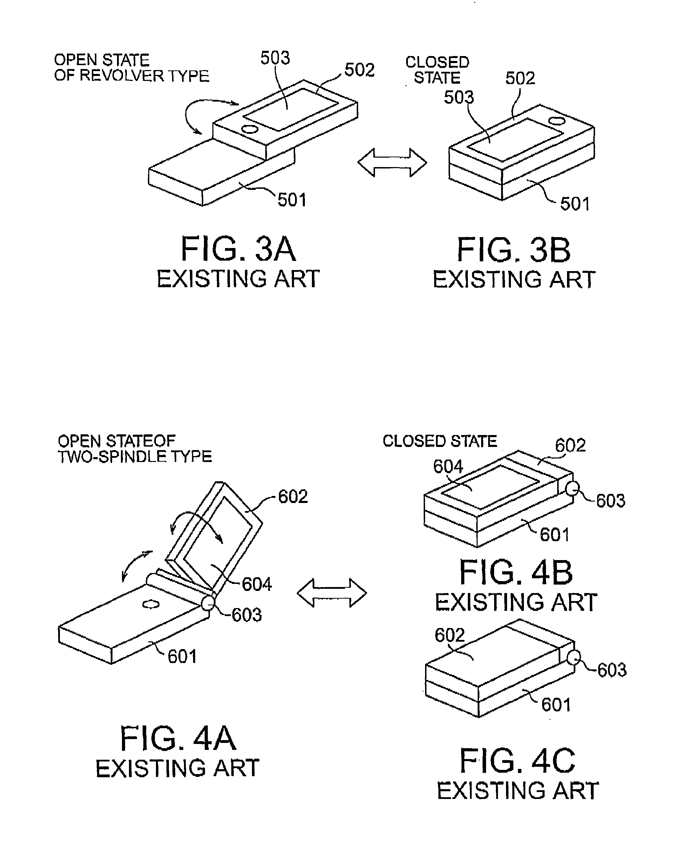

The revolver type portable terminal is structured such that in an opened state, a lower case 501 having operational buttons on the front surface and an upper case 502 having a display portion 403 on the front surface revolve so as to expose the operational buttons on the front surface of the lower case 501 as shown in Fig. 3A, and in a closed state, the lower case 501 and the upper case 502 pivot on a predetermined rotational axis by 180 degrees in a horizontal plane to overlap with each other as shown in Fig. 3B.

The two-spindle portable terminal is structured such that a lower case and an upper case can rotate about a first axis and are foldable about a second axis.

That is, as shown in Fig. 4A, a lower case 601 having operational buttons on the front surface is coupled with an upper case 601 having a display portion 604 on the front surface rotatably on a hinge portion 603. In an opened state, the operational buttons on the front surface of the lower case 601 are exposed. On the other hand, in a closed state, as shown in Fig. 4B, the lower case 601 and the upper case 602 rotate about the hinge portion 603 and then, the front surfaces of the lower case 601 and the upper case 602 overlap with each other with little gap to expose the display portion 604. Alternatively, as shown in Fig. 4C, the upper case 602 is rotated about the first axis of the hinge portion 603 in an opened state, after which the upper case 602 and the lower case 601 pivot on the second axis perpendicular to the first axis to overlap with little gap to hide the display portion 604.

Japanese Unexamined Patent Application Publication No. 2002-344591 discloses another example of the two-spindle portable terminal, for instance, In this two-spindle portable terminal, a lower case having operational buttons on the front surface is rotatably coupled through a hinge portion with an upper case that is slightly smaller than the lower case, and has a display portion on the front surface. The hinge portion has a support casing that is substantially U-shaped, a first hinge for coupling one end of the lower case and a proximal end of the support casing rotatably on a first axis, and a pair of pivots for coupling a pair of distal ends of the support casing and right and left sides of the upper case rotatably on a second axis parallel to the first axis. In the open state, the operational buttons on the front surface of the lower case are exposed. In the closed state, the lower case and the upper case revolve about the hinge portion, and thus the front surfaces of the upper case and lower case overlap with little gap to expose the display portion. Alternatively, the upper case rotates about the first axis of the hinge portion by 180 degrees in an opened state, and then the lower case and the upper case revolve and overlap with little gap to hide the display portion from view.

The aforementioned existing portable terminals have problems as discussed in the section of "BACKGROUND OF THE INVENTION" of this specification.

Embodiments of the present invention will be described in detail below with reference to the accompanying drawings.

### First Embodiment

A portable terminal according to a first embodiment of the present invention has a communication function, an information transmitting/receiving function including an Internet access function or mail receiving/transmitting function, an information processing function, and a photographing function.

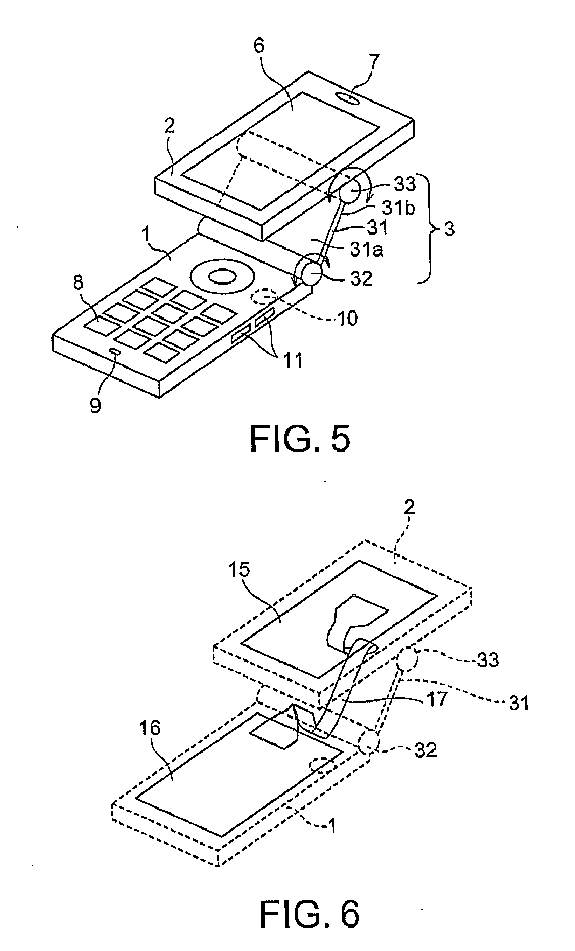

As shown in Fig. 5, the portable terminal of this embodiment is a foldable type one having a plate-like shape. The portable terminal has a lower case 1 having operational buttons 8 on the front surface, an upper case 2 having a display portion 6 on the front surface, and a hinge portion 3 for rotatably coupling the upper case 2 and the lower case 1.

The hinge portion 3 has a plate-like intermediate case 31, a first hinge 32 for coupling the vicinity of one end of the plate-like intermediate case 31 with the vicinity of one end of the lower case 1 rotatably about a first axis extending in a width direction of the lower case 1 and the upper case 2, and a second hinge 33 for coupling the intermediate case 31 with the upper case 2 rotatably about a second axis parallel to the first axis.

The portable terminal of this embodiment can take at least a first opened/closed state, a second opened/closed state, and a third opened/closed state. In the first opened/closed state, the front surfaces of the upper case 2 and the lower case 1 oppose each other. In the second opened/closed state, the front surfaces of the upper case 2 and the lower case 1 are turned in the same direction. In the third opened/closed state, the rear surface of the upper case 2 and the front surface of the lower case 1 oppose each other.

The second hinge couples between the other end of the intermediate case 31 and the rear surface of the upper case 2.

The front surface of lower case 1 has operational buttons 8 used for inputting various kinds of information and a microphone 9 for capturing the voice of a speaker. The rear surface of lower case 1 has a camera 10 for picking up a subject image. The side face of lower case 1 has side buttons 11 for adjusting the volume of received sound in the opened state, and clicking the shutter of the photographing function in the closed state, for example.

The front surface of the upper case 2 has display portion 6 such as a liquid crystal display and a speaker 7 for transmitting the received sound. The rear surface of the upper case 2 has the second hinge 33 provided at the midpoint in the longitudinal direction.

The second hinge 33 has almost the same width as that of the upper case 2. The first hinge 32, the intermediate case 31, the second hinge 33, and the upper case 2 have the same width as that of the lower case 1. A space substantially equivalent to the width of the intermediate case 31, that is a wide space, is defined in intermediate case 31. A space substantially equivalent to the width of the intermediate case 31, that is a wide space,is defined in each of the first hinge 32 and the second hinge 33.

Fig. 6 shows internal circuit boards of the upper case 2 and the lower case 1 of the portable terminal of Fig. 5 and an example of how to wire between the circuit boards. A lower printed board 16 is provided in lower case 1, and an upper printed board 15 is provided in upper case 2. The printed boards 15 and 16 are connected through a flexible board 17 passed through the first hinge 32, the intermediate case 31, and the second hinge 33 by means of a connector or solder. The upper printed board 15 and the lower printed board 16 incorporate integrated circuits (ICs) constituting the portable terminal.

The flexible board 17 is stretched in the internal spaces of the first hinge 32 and the second hinge 33. This prevents a stress from being applied to the flexible board 17 in the various opened/closed states of the portable terminal of this embodiment and during the transition to another form. In the present invention, the intermediate case 31, and the first hinge 32 and the second hinge 33 ensure especially wide internal spaces, so the degree of freedom in the insertion form of the flexible board is high, which contributes to a high strength and durability of the flexible board.

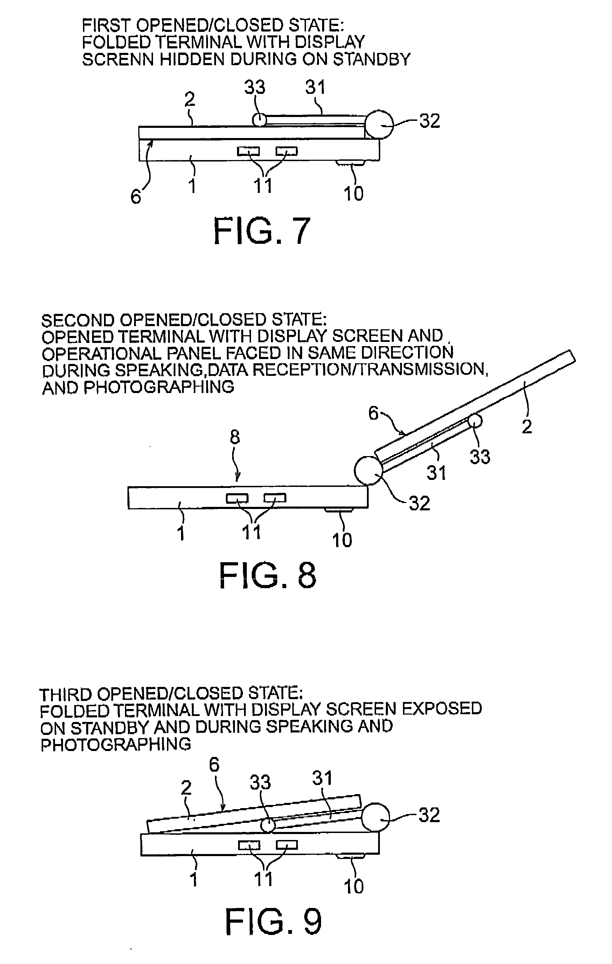

Referring next to Figs. 7 to 11, a folding operation of the portable terminal of Figs. 5 and 6 is described.

As shown in Fig. 7, the first opened/closed state is a closed state with a hidden display portion, which is obtained as follows. The upper case 2 is rotated about the second hinge 33 in such a manner that the surface of upper case 2 opposite to the surface having display portion 6 comes into contact with the front surface of the intermediate case 31 (the surface opposite to the surface of ; lower case 1 having operational buttons 8, as denoted by 31 a in Fig. 5), and under the above state, the upper case 2 and the intermediate case 31 are rotated about the first hinge 32 such that the display portion 6 of the upper case 2 comes into close contact with the front surface of the lower case 1 having the operational buttons 8.

In the first opened/dosed state, the display portion 6 is hidden, in other words, not exposed. Hence, it is possible to prevent a situation that a screen of the display portion 6 is broken or damaged due to an extemally applied stress and that the operational buttons 8 are erroneously depressed. The first opened/closed state is used mainly during a standby time.

As shown in Fig. 8, the second opened/closed state is obtained as follows. The intermediate case 1 is opened (rotated outwardly) from the first opened/closed state of Fig. 7 about the first hinge portion 32 by about 150 degrees from the surface (operational surface) having the operational buttons 8 of the lower case 1.

The opening operation is the same as that of any general foldable type portable terminal. In the second opened/closed state, a user can depress the operational buttons 8 and also view the display screen of the display portion 6, which is the same as an opened state of the general foldable type portable terminal. The second opened/closed state is used during speaking, creation of a message, data transmission/reception, and photographing.

As shown in Fig. 9, the third opened/closed state is a closed state with exposed display portion 6 which is obtained as follows. The upper case 2 is rotated about the second hinge 33 such that the surface of the upper case 2 opposite to the surface having the display portion 6 comes into contact with the rear surface (31b of Fig. 5) of the intermediate case 31, and under this state, the upper case 2 and the intermediate case 31 are rotated about the first hinge 32 such that the surface of the upper case 2 opposite to the display portion 6 and the intermediate case 31 overlap with the front surface of the lower case 1 having operational buttons 8.

In the closed state, the display screen of the display portion 6 is exposed. Further, a lens of a camera 10 and the display screen of display portion 6 are faced in opposite directions. The third opened/closed state is used in a situation that the side buttons 11 are used to simply execute various functions during the standby time, speaking, and photographing. In addition, in the third opened/closed state, the display portion 6 can stably be kept in position in the closed state.

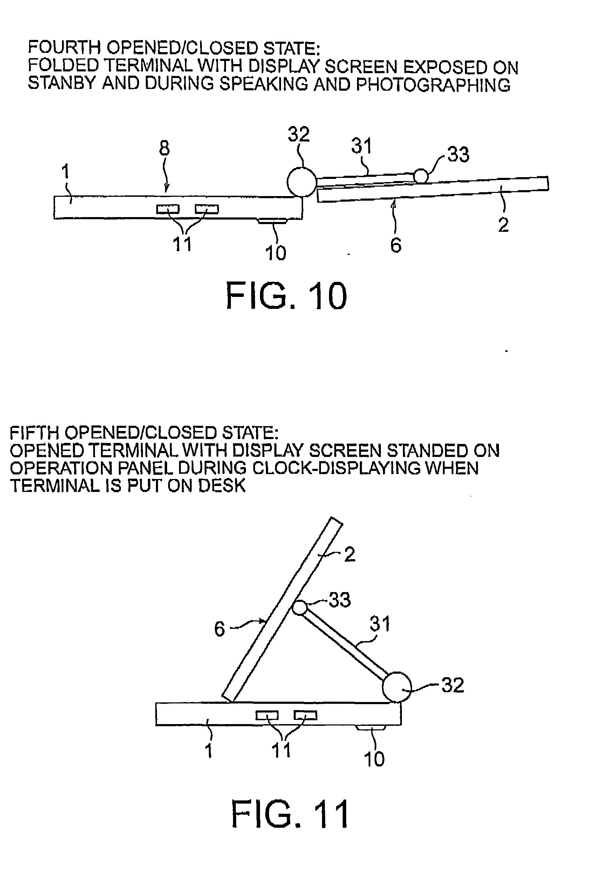

As shown in Fig. 10, a fourth opened/closed state is obtained as follows.

The intermediate case 31 is rotated from the closed state of Fig. 9 about first hinge 32 by 180 degrees from the operational surface of the lower case 1. Under this opened state, the lens of the camera 10 and the display screen of the display portion 6 face in the same direction. The third opened/closed state is used during a self-portrait mode among various photographing modes.

As shown in Fig. 11, a fifth opened/closed state is an intermediate state between the states of Figs. 8 and 9. While in the opened state of Fig. 8, the upper case 2 is rotated about the second hinge 33 clockwise by about 90 degrees while the intermediate case 31 is rotated about the first hinge 32 counterclockwise by about 90 degrees to obtain the opened state of Fig. 11.

While in the opened state of Fig. 9, the intermediate case 31 is rotated about the first hinge 32 clockwise by about 90 degrees while the upper case 2 is rotated about the second hinge 33 counterclockwise by about 90 degrees to obtain the opened state of Fig. 11. That is, the upper case 2 is directly slid to the right from the opened state of Fig. 9 to obtain the state of Fig. 11.

In the opened/closed state of Fig. 11, the display portion 6 is stably supported at an angle to the lower case 1 by means of the intermediate case 31 to expose display portion 6. The fifth opened/dosed state is used in a situation that a calendar or time is displayed on the display portion 6, and the portable terminal is put on a table in a stable form and used as a desk calendar or table clock.

As mentioned above, in this embodiment, the upper case 2 is rotated to thereby expose the display portion 6 even in the closed state as shown in Fig. 9, so there is no need to provide the sub-display portion 306 on the rear side of the upper case as shown in the foldable type portable terminal of Fig. 1. Hence, the upper case 2 can be made thin, resulting in cost reduction. Further, the upper case 2 is rotated to enable the closed state with the display portion 6 hidden as shown in Fig. 7, so the display screen of the display portion is less damaged than the sliding type portable terminal of Fig. 2 or the revolver type portable terminal of Fig. 3 with the display portion being exposed all the time.

In this embodiment, the rotational axes of the second hinge 33 and first hinge 32 for rotating the upper case 2 extend in the same direction, so the portable terminal of this embodiment has a simpler structure than the two-spindle portable terminal of Fig. 4 having different axial directions, and it is easy for a user to rotate the upper case 2 having operational portion 6 to fold the portable terminal.

### Second Embodiment

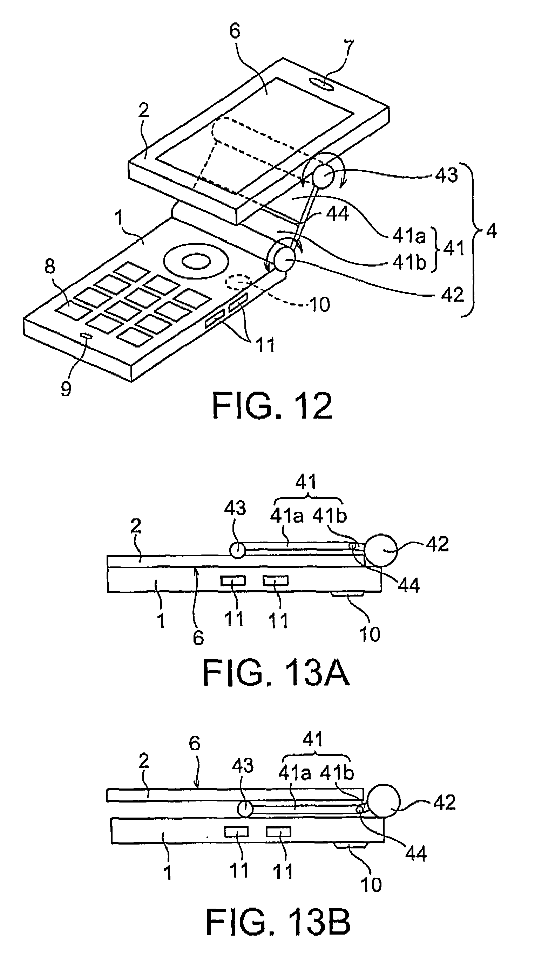

Fig. 12 shows a portable terminal according to a second embodiment of the present invention. In Fig. 12, components identical and similar to those of Fig. 5 are denoted by the same reference numerals, and detailed description of the components is omitted.

As shown in Fig. 12, the portable terminal of this embodiment has an intermediate case 41 instead of the intermediate case 31 of the first embodiment of Fig. 5. The intermediate case 41 includes a proximal portion 41 b including the vicinity of one end of the intermediate case 41, and a main portion 41 a including the other end. The main portion 41 a has a length of the side perpendicular to the width direction and the thickness direction of the intermediate case 41 is longer than that of the proximal portion 41b. The proximal portion 41b and the main portion 41 a of the intermediate case 41 are coupled through a bendable portion 44 or a third hinge parallel to the first axis. Thus, the portable terminal can be folded into a smaller size in the thickness direction in the closed state.

Figs. 13A and 13B are side views showing a first opened/closed state and a third opened/closed state of the portable terminal of Fig. 12.

In the first opened/closed state of Fig. 13A, the portable terminal is folded such that the display portion 6 overlaps with the operational panel of the lower case 1 with little gap. The bendable portion 44 is bent as shown in Fig. 13A, so the lower case 1, the upper case 2, and the main portion 41 a of the intermediate case 41 are superposed on one another in parallel, and further, the front surfaces of the lower case 1 and the upper case 2 come into close contact with each other. Thus, the second embodiment can reduce the total thickness of the portable terminal as compared with the first opened/closed state (Fig. 7) of the first embodiment.

The third opened/closed state of Fig. 13B is obtained by rotating the upper case 2 about a second hinge 43 by 180 degrees from the first opened/closed state of Fig. 13A. While in this closed state, the display portion 6 is exposed, and the display screen of the display portion can be seen.
The bendable portion 44 is bent as shown in Fig. 13B, so the main portion 41 a of the intermediate case 41 and the upper case 2 are layered with each other in parallel. Hence, in this embodiment, the total thickness of the portable terminal can be significantly smaller than that of the third opened/closed state (Fig. 9) of the first embodiment.

The present invention has been described by way of the two embodiments, but the present invention allows, needless to say, various modifications.

For example, although the above embodiments describe a plate-like intermediate case, an intermediate case of any other shape can be used insofar as the intermediate case can accommodate the electric wire for connecting between the upper and lower cases, and to ensure a predetermined level of strength for opening/closing operations. For example, a plastic or cloth-made strip may cover a frame having an internal space through which the flexible board is passed.

## Claims

1. A portable terminal comprising:
a lower case (1) having a plate-like shape and being provided on a front surface with an operational buttons (8);
an upper case (2) having a plate-like shape and being provided on a front surface with a display portion (6); and
a hinge portion (3) for rotatably coupling said lower case and said upper case;
said hinge portion (3) including:
an intermediate case (31) having a plate-like shape;
a first hinge (32) for rotatably coupling the vicinity of one end of said lower case with the vicinity of one end of said intermediate case about a first axis; and
a second hinge (33) for rotatably coupling said upper case with said intermediate case about a second axis parallel to said first axis;
said portable terminal being capable of taking a first opened/dosed state where said front surface of said lower case opposes said front surface of said upper case, a second opened/closed state where said front surface of said lower case and said front surface of said upper case extend in parallel, and a third opened/closed state where said front surface of said lower case opposes a rear surface of said upper case;
**characterized in that** said second hinge (33) couples the other end of said intermediate case (31) with said rear surface of said upper case (2).

2. A portable terminal as claimed in claim 1, further comprising:
a first printed board (16) incorporated in said lower case;
a second printed board (15) incorporated in said upper case; and
a flexible board (17) for coupling between said first printed board and said second printed board;
said flexible board being passed through internal spaces of said first hinge, said intermediate case, and said second hinge.

3. A portable terminal as claimed in claim 1 or 2, wherein the width of said second hinge (33) is subequal to the width of said upper case (2).

4. A portable terminal as claimed in any one of claims 1 to 3, wherein the widths of said first hinge (32), said intermediate case (31), said second hinge (33), and said upper case (2) are subequal to the width of said lower case (1), respectively.

5. A portable terminal as claimed in any one of claims 1 to 4, wherein said intermediate case (41) includes a proximal portion (41 b) including said one end and a main portion (41 a) including said other end;
said main portion (41 a) being larger than said proximal portion (41 b) in length perpendicular to width and thickness directions of said intermediate case (41);
said proximal portion (41 b) and said main portion (41 a) of said intermediate case (41) being coupled with each other through a bendable portion (44) parallel to said first axis;
in the third opened/closed state, said lower case (1), said main portion (41a) of said intermediate case (41), and said upper case (2) being superposed on one another in parallel.

6. A portable terminal as claimed in claim 5, wherein, in the first opened/closed state, said lower case (1), said upper case (2), and said main portion (41 a) of said intermediate case (41) are superposed on one another in parallel, and said front surface of said lower case (1) faces said front surface of said upper case (2).

7. A portable terminal as claimed in any one of claims 1 to 6, further comprising a camera (10) mounted on the rear surface of said lower case (1).
